# EUROPÄISCHE PATENTSCHRIFT

(11) **EP 2 490 559 B1**
(45) Veröffentlichungstag und Bekanntmachung des Hinweises auf die Patenterteilung: **13.11.2013**
(21) Anmeldenummer: 10763626.8
(22) Anmeldetag: 05.10.2010
(51) Int. Cl.: A41D 19/015, B29C 33/00, B29C 43/22

(54) **UNTERSTÜTZUNGSEINRICHTUNG**
SUPPORT DEVICE
SYSTÈME DE SUPPORT

(30) Priorität: 24.10.2009 DE 102009050586
(43) Veröffentlichungstag der Anmeldung: 29.08.2012
(73) Patentinhaber: Gottlieb Binder GmbH & Co. KG, 71088 Holzgerlingen (DE)
(72) Erfinder: TUMA, Jan, 71083 Herrenberg (DE)
(74) Vertreter: Bartels, Martin Erich Arthur
(86) Internationale Anmeldenummer: PCT/EP2010/006081
(87) Internationale Veröffentlichungsnummer: WO 2011/047786

(56) Entgegenhaltungen:
- DE-A1-102004 012 067
- DE-U1- 29 919 345
- US-A- 6 081 928
- US-A1- 2004 025 224

## Beschreibung

Die Erfindung betrifft eine Unterstützungseinrichtung zur Verbesserung der Haptik und/oder einer Greifanmutung bei Händen bei der Berührung von Oberflächen, die insbesondere glatt und/oder empfindlich sind gemäß der Merkmalsausgestaltung des Oberbegriffes des Patentanspruches 1.

Bei der Berührung von glatten und/oder empfindlichen Oberflächen zum Durchführen einer Bewegung, beispielsweise durch nackte Hände eines Menschen oder durch Hände eines Roboters, besteht die Gefahr einer unerwünschten Relativbewegung zwischen der Oberfläche und der sie berührenden Hand. Beispielsweise kann eine derartige Relativbewegung im Fall eines durch die Hand ergriffenen Gegenstandes dazu führen, dass dieser der Hand entgleitet und bei einer anschließenden und unkontrollierten Bewegung Beschädigungen erfährt. Insbesondere bei empfindlichen Oberflächen lässt sich jedoch nicht durch einfache Maßnahmen, wie beispielsweise der Erhöhung der durch die Hand auf den berührten Gegenstand wirkenden Kraft, eine sicherere Handhabung erreichen, da dies zu einer Beschädigung einer empfindlichen Oberfläche führen kann.

Aus der WO 2008/113816 A2 ist eine Unterstützungseinrichtung (Handschuh) zur Verbesserung der Greifanmutung bei Händen mit einer Wirkoberfläche bekannt, die mit Teilen der jeweiligen Hand für das Durchführen einer Bewegung zusammenwirkt, und einzelne napfartige Vorsprünge aufweist, die an ihren freien Enden jeweils mit einer Art Mikrokrater versehen sind, dessen Krateröffnung ins Freie mündet. Kommen die napfartigen Vorsprünge unter Kraft- oder Druckeinwirkung in Berührung mit einem entsprechenden Gegenstand, legt sich die jeweilige in Berührung kommende Krateröffnung um und bildet für den napfartigen Vorsprung eine Art sich verbreiternden Tellerrand aus, der für eine verbesserte Anhaftung des Vorsprunges mit dem genannten Gegenstand zu einer Reibungserhöhung führt, und im übrigen dient die bekannte Lösung zur Entlastung einer Bedienperson aufgrund einer erhöhten Dämpfungswirkung, hervorgerufen durch die Mikrokraterstruktur in den Vorsprüngen.

Eine vergleichbare Lösung ist auch durch die US 2008/0201823 A1 vorbekannt, bei der im Sinne einer Aufrauhung der Wirkoberfläche der Unterstützungseinrichtung (Handschuh) an dieser pyramidenartige Vorsprünge vorgesehen sind, die gleichfalls die Reibung zwischen den dahingehenden Vorsprüngen und einem zu handhabenden Gegenstand erhöhen.

Ein weiterer Vertreter der dahingehenden Handschuhlösung ist in dem deutschen Gebrauchsmuster 93 08 338 aufgezeigt, bei dem dreieck- oder napfförmige Vorsprünge einstückig mit dem Oberflächenmaterial eines Arbeitshandschuhs verbunden sind, der aus wasserundurchlässigem Material besteht, insbesondere aus einem elastischen Material, wie Kautschuk oder dergleichen. Der derart ausgestattete Arbeitshandschuh eignet sich insbesondere für den Haushalt zum Reinigen und Entfernen von Schalen von Kartoffeln, Möhren oder dergleichen mehr durch Reiben.

Eine andere Gattung einer Unterstützungseinrichtung bilden die Handschuhe nach der US 6,081,928 A sowie der US 2006/0282936 A1. Diese bekannten Handschuhlösungen weisen auf ihrer Oberseite saugnapfartige Vorsprünge auf, die bei Berühren mit einem Gegenstand eine Saugwirkung auf diesen ausüben und somit zu einer Verhaftung mittels Vakuum führen. Nachteilig bei diesen bekannten Lösungen ist, dass es teilweise nur zu einer unzureichenden Anhaftung zwischen Unterstützungseinrichtung und dem zu berührenden Gegenstand kommt und dass die Vorsprünge teilweise von der Unterstützungseinrichtung weit vorstehen, was den Bedienkomfort beeinträchtigt. Ferner sind die bekannten Lösungen teilweise aufwendig in der Herstellung und mithin teuer.

Ausgehend von diesem Stand der Technik liegt der Erfindung die Aufgabe zugrunde, unter Vermeidung der vorstehend beschriebenen Nachteile eine Unterstützungseinrichtung zur Verbesserung der Haptik und/oder einer Greifanmutung bei Händen humanoider oder androider Art bereit zu stellen, die insbesondere bei der Berührung von Oberflächen, die glatt und/oder empfindlich sind, eine ungewollte Relativbewegung zwischen der Hand und der Oberfläche wirksam verhindern. Eine dahingehende Aufgabe löst eine Unterstützungseinrichtung mit den Merkmalen des Patentanspruches 1 in seiner Gesamtheit.

Dadurch, dass gemäß dem kennzeichnenden Teil des Patentanspruches 1 die jeweiligen freien Stirnseiten der Vorsprünge derart ausgeführt sind, dass deren Anhaftung durch zwischen den freien Stirnseiten und der jeweiligen Oberfläche wirksame Van-der-Waals-Kräfte erfolgt, sind unbeabsichtigte Relativbewegungen zwischen den jeweiligen Oberflächen und der sie berührenden Hand wirksam verhindert, wobei für das Zusammenwirken von Unterstützungseinrichtung und dem jeweils weiteren Bauteil weder auf reibungserhöhende Vorsprünge zurückgegriffen zu werden braucht noch auf solche Vorsprünge, die eine Saugnapfwirkung (Vakuum) generieren. Insoweit kommt es zu einer sehr schonenden Anhaftung, da der Effekt der Anhaftung durch Van-der-Waals-Kräfte von zumindest Teilen der Hand oder des Handschutzes an den Oberflächen nach deren Berührung nur noch unwesentlich von einer von der Hand oder des Handschutzes auszuübenden Kraft bestimmt ist, was die Anwendung der erfindungsgemäßen Unterstützungseinrichtung insbesondere für sehr empfindliche Oberflächen als geeignet erscheinen läßt.

Damit zwischen den jeweiligen freien Stirnseiten der Vorsprünge und der jeweiligen Oberfläche die molekularen Van-der-Waals-Kräfte wirken können, ist hierbei darauf zu achten, dass eine möglichst große Anzahl der freien Stirnseiten der Vorsprünge in Anlage an die jeweilige Oberflächen gelangen kann, da die Van-der-Waals-Kräfte sehr schnell mit zunehmendem Abstand der Stirnseite von der jeweiligen Oberfläche abnehmen. So ist in der Literatur angegeben, dass die Van-der-Waals-Kräfte in Abhängigkeit eines Abstands r der Stirnseite von der jeweiligen Oberfläche mit 1/r⁶ abnehmen.

Die Länge der Vorsprünge ist daher vorzugsweise derart gewählt, dass diese mit ihrer jeweiligen freien Stirnseite in einer gemeinsamen Ebene münden, so dass vorzugsweise der Abstand der freien Stirnseiten der Vorsprünge zu der zu berührenden Oberfläche im wesentlichen konstant ausfällt und benachbarte freie Stirnseiten gleichzeitig in anhaftende Anlage an die Oberfläche gebracht werden können.

Bei einer Ausführungsform der erfindungsgemäßen Unterstützungseinrichtung sind zumindest die Stirnseiten der Vorsprünge der Wirkoberfläche aus einem oleophoben, rückstandsfrei haftenden Material, insbesondere aus Polyvinylsiloxan, gebildet. Polyvinylsiloxan ist nicht brennbar, kann auch noch bei Temperaturen über 150°C eingesetzt werden und ist wärmeisolierend, was sich insbesondere bei der Berührung von heißen Oberflächen als günstig erweist. Beispielsweise bei der Handhabung von Halbleiter-Wafern als auch von optischen Gläsern ist wegen der geforderten hohen Reinheit der Oberflächen der genannten Materialien die rückstandsfreie Haftung der Stirnseiten der Vorsprünge von Vorteil. Auch im Laborbereich und in der Chirurgie lässt sich die erfindungsgemäße Unterstützungseinrichtung zur sicheren Handhabung von Werkzeugen, die oftmals mit glatten Oberflächen ausgestattet sind, einsetzen. Im Laborbereich kann die Unterstützungseinrichtung auch sinnvoll zum Verschieben von Gegenständen mit glatter Oberfläche verwendet werden; so kann beispielsweise durch einfaches "Antippen" der Oberfläche kleinerer Gegenstände mit der Wirkoberfläche eine ausreichende Anhaftung erzielt werden um die dahingehenden Gegenstände in der gewünschten Weise kontrolliert verlagern zu können.

Als weitere Materialien zumindest für die Stirnseiten der Vorsprünge sind alternativ oder ergänzend auch additionsvernetzende Silikon-Elastomere, Acrylate oder auch Kautschuk einsetzbar.

Bei einer Ausführungsform der erfindungsgemäßen Unterstützungseinrichtung weisen die Vorsprünge jeweils einen Kopfteil auf, der von einem Stielteil getragen stirnseitig jeweils eine Kontaktfläche aufweist, welche bei Anhaftung von zumindest Teilen der Hand oder des Handschutzes zumindest teilweise an der Oberfläche anliegt. Die Ausbildung des Kopfteils an dem Stielteil fördert den Ausgleich zumindest geringer Unebenheiten der berührten Oberfläche, da das sich jeweilige Kopfteil der ihm gegenüberliegenden lokalen Geometrie der Oberfläche zumindest in begrenztem Maße angepasst ausrichten kann. Bei einer weiteren Ausführungsform der erfindungsgemäßen Unterstützungseinrichtung kann hierzu auch vorgesehen sein, dass zwischen dem Kopfteil und dem Stielteil des Vorsprungs mindestens ein Gelenkteil vorgesehen ist, welches dahingehende Anpassvorgänge noch weiter unterstützt.

Bei der Querschnittsform des Kopfteils haben sich sowohl runde als auch vieleckige, insbesondere sechseckige oder hexagonale Querschnittsformen bewährt. Bei Annäherung des Kopfteils an eine Oberfläche kann dieses zunächst mit seinem Randbereich die Oberfläche berühren.

Bei einer Ausführungsform der erfindungsgemäßen Unterstützungseinrichtung sind die Vorsprünge regelmäßig oder unregelmäßig auf einem Träger angeordnet mit einer Flächendichte von 10 000 bis 60 000, bevorzugt von 20 000 bis 45 000 und besonders bevorzugt von circa 30 000 Vorsprüngen pro Quadratzentimeter der Fläche des Trägers. Die zwischen den freien Stirnseiten der Vorsprünge und der jeweiligen Oberfläche wirksamen Vander-Waals-Kräfte sind jeweils sehr klein. Durch eine möglichst hohe Flächendichte der Vorsprünge ist jedoch erreicht, dass die sich ergebende Summe der Einzelbeiträge der Vorsprünge der Wirkoberfläche zur Anhaftung erstaunlich hohe Werte annimmt.

Bei einer Ausführungsform der erfindungsgemäßen Unterstützungseinrichtung sind die Vorsprünge zur Bildung der Wirkoberfläche von dem Träger getragen, der sich einstückig an die der freien Stirnseite gegenüberliegenden Seite der Vorsprünge anschließt oder von einer Oberfläche von zumindest Teilen der Hand oder des Handschutzes ausgebildet ist. Sofern sich der Träger einstückig an die der freien Stirnseite gegenüberliegenden Seite der Vorsprünge anschließt, ist zum einen eine sichere Lagerung der Vorsprünge an dem Träger gewährleistet, zum anderen erlaubt eine dahingehende Ausführung eine einfache Anpassung der Abmessungen eines mit den Vorsprüngen versehenen Trägers an die Anforderungen der jeweiligen Unterstützungseinrichtung, beispielsweise durch Zuschneiden oder Ausstanzen. Der Träger kann jedoch auch beispielsweise von Oberflächen von zumindest Teilen der Hand, insbesondere einer Hand androider Art, beispielsweise einer Hand eines Roboters, ausgebildet sein, an denen durch geeignete Verbindungsverfahren, wie beispielsweise Kleben oder Schweißen, die Vorsprünge angebracht sind. Auch bei dieser Lösung ist es möglich, gezielt nur wählbare Bereiche der Hand mit Vorsprüngen zu versehen. Letzteres gilt auch für den Fall, dass der Träger von einer Oberfläche von zumindest Teilen des Handschutzes ausgebildet ist.

Bei einer Ausführungsform der erfindungsgemäßen Unterstützungseinrichtung ist der Träger in der Art einer Folie ausgebildet. Je nach Anwendung kann der Träger hierbei elastisch oder aber auch nichtelastisch ausgeführt sein. Eine elastische Ausführung des Trägers, insbesondere bei einer Unterstützungseinrichtung für Hände humanoider Art geht mit dem Vorteil einher, dass hierdurch die Feinmotorik der Hand jedenfalls nicht eingeschränkt ist. Des Weiteren erlaubt eine elastische Ausführung des Trägers auch eine weitgehende Anpassbarkeit der Wirkoberfläche an die lokale Geometrie der zu berührenden Oberfläche.

Bei einer Ausführungsform der erfindungsgemäßen Unterstützungseinrichtung ist die Folie mittels einer Klebeverbindung mit Teilen der Hand oder des Handschutzes verbunden, insbesondere unter Verwendung eines Acrylatklebers.

Bei einer Ausführungsform der erfindungsgemäßen Unterstützungseinrichtung sind aus der Folie Folienstücke vereinzelbar, die an wählbaren Bereichen der Hand oder des Handschutzes anordenbar sind. Auf diese Weise lassen sich gezielt diejenigen Bereiche der Hand oder des Handschutzes mit Folienstücken versehen, die zur Berührung von Oberflächen vorgesehen sind, an denen eine Anhaftung erwünscht ist. Des Weiteren können dergestalt bei einem Handschutz oder einer Hand aber auch gezielt Bereiche, insbesondere Bereiche von Gelenken der Hand, nicht mit der Folie versehen sein, um so eine möglichst hohe Beweglichkeit beizubehalten.

Bei einer Ausführungsform der erfindungsgemäßen Unterstützungseinrichtung ist mindestens ein Folienstück jeweils im Bereich der Fingerkuppen auf der Innenhandseite der Hand oder des Handschutzes angeordnet. Für die Bewegung empfindlicher Oberflächen mittels einer Hand, ist insbesondere der Bereich der Fingerkuppen, bei einer Hand humanoider Art von besonderer Bedeutung, da bei Menschen hier eine stark ausgeprägte Sensorik gegeben ist. Daher bieten sich insbesondere Fingerkuppen oder die auf der Innenhandseite liegenden Endglieder der jeweiligen Finger für eine Ausstattung mit jeweils einem oder mehreren Folienstücken an, um gerade hier eine erhöhte Anhaftung an den zu handhabenden Oberflächen zu erreichen.

Bei einer Ausführungsform der erfindungsgemäßen Unterstützungseinrichtung ist mindestens ein Folienstück auf der Handinnenfläche, insbesondere im Bereich des Handballens angeordnet. Eine derartige Anordnung von mindestens einem Folienstück erweist sich besonders dann als nützlich, wenn der Handballen mit der Oberfläche in abstützender Weise in Berührung kommt. Bei einer weiteren Ausführungsform der erfindungsgemäßen Unterstützungseinrichtung ist eine Kombination von Folienstücken, sowohl im Bereich der Fingerkuppen als auch im Bereich des Handballens vorgesehen. Hierdurch kann eine sich gegenseitig ergänzende Wirkung der Unterstützungseinrichtung erreicht werden. Befinden sich durch eine entsprechende Greifbewegung der Hand die zugeordneten Fingerkuppenbereiche und der zugeordnete Handballenbereich jeweils auf gegenüberliegenden Seiten der Oberfläche so sind auf beiden Seiten der Oberfläche Vorsprünge der Unterstützungseinrichtung in Anlage und erlauben ein sicheres Bewegen des ergriffenen Gegenstandes.

Bei einer Ausführungsform der erfindungsgemäßen Unterstützungseinrichtung ist mindestens ein Folienstück auf der Handrückseite, insbesondere im Bereich der Finger angeordnet. Eine Anordnung auf der Handrückseite, insbesondere im Bereich der Finger, unterstützt die Vermeidung einer Relativbewegung sofern die mit den Folienstücken bestückten Bereiche der Finger in Kontakt mit einer glatten und/oder empfindlichen Oberfläche sind. Dies kann beispielsweise bei Handschuhen für Bobfahrer sinnvoll ausgenutzt werden. Wenn sich ein Bobfahrer beim Startvorgang mit entsprechend ausgerüsteten Handschuhen als Handschutz an der glatten Oberfläche eines Eiskanals abstützt, kann er so eine kraftvolle Abstoßbewegung unter Beibehaltung der anhaftenden Anlage der Finger der geballten Hände an der Oberfläche des Eiskanals ausführen und so eine Vorschubbewegung des Bobs in effektiver Weise veranlassen.

Bei einer Ausführungsform der erfindungsgemäßen Unterstützungseinrichtung ist die Unterstützungseinrichtung in Form eines Handschuhs für eine humanoide Hand vollständig aus der Folie gebildet, die insbesondere durch ein Blasformverfahren in die Form eines Handschuhs gebracht ist. Vollständig aus der Folie gebildete Handschuhe lassen sich zum einen kostengünstig in einem Schritt herstellen, zum anderen sind derartige Handschuhe an allen Bereichen ihrer Oberfläche in der vorteilhaften Möglichkeit der Erhöhung einer Anhaftung an Oberflächen ausgestattet und lassen sich somit universell einsetzen. Des Weiteren können derartige Handschuhe auch als sogenannte "Innenhandschuhe" dienen, die beispielsweise bei Handschuhen für Snowboardfahrer zum Einsatz gelangen, bei denen über den Innenhandschuh ein Außenhandschuh übergezogen werden kann. Durch die erfindungsgemäße Unterstützungseinrichtung in Form des Innenhandschuhs ist in einem solchen Fall gewährleistet, dass zwischen dem Außenhandschuh und dem Innenhandschuh keine unerwünschte Relativbewegung möglich ist, da die Innenseite des Außenhandschuhs an der mit den stielartigen Vorsprüngen versehenen Außenseite des Innenhandschuhs anhaftet. Hierdurch wird dem Snowboardfahrer insbesondere eine zuverlässige Greifanmutung und Haptik geboten, was bei plötzlichen Greifvorgängen oder Abstützvorgängen in Gefahrensituationen einen erheblichen Vorteil darstellt. Selbstverständlich ist die letztgenannte Anwendung auch umkehrbar, in dem die Innenseite des Außenhandschuhs die erfindungsgemäße Unterstützungseinrichtung ausbildet und in anhaftende Anlage mit einem Innenhandschuh bringbar ist.

Nachstehend ist die Erfindung anhand eines in der Zeichnung dargestellten Ausführungsbeispiels im Einzelnen erläutert. Es zeigen:
- Fig. 1: in Ansicht einen mit der erfindungsgemäßen Unterstützungseinrichtung versehenen Handschutz von der Innenseite her;
- Fig. 2: einen weiteren in entsprechender Darstellung nach der Fig. 1 mit der erfindungsgemäßen Unterstützungseinrichtung versehenen Handschutz;
- Fig. 3: eine stark vergrößerte Darstellung des in der Fig. 2 mit X bezeichneten Ausschnitts;
- Fig. 4: eine Seitenansicht einer Wirkoberfläche mit den stielartigen Vorsprüngen gemäß der Darstellung nach der Fig. 3, und
- Fig. 5: eine schematische Darstellung der wesentlichen Teile einer Herstelleinrichtung zur Herstellung der erfindungsgemäßen Unterstützungseinrichtung.

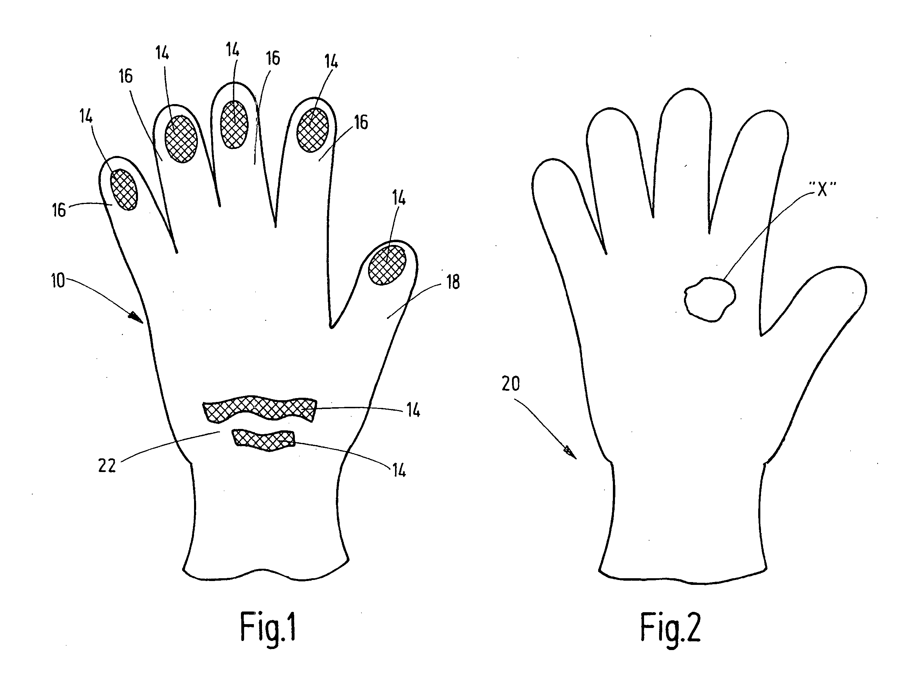

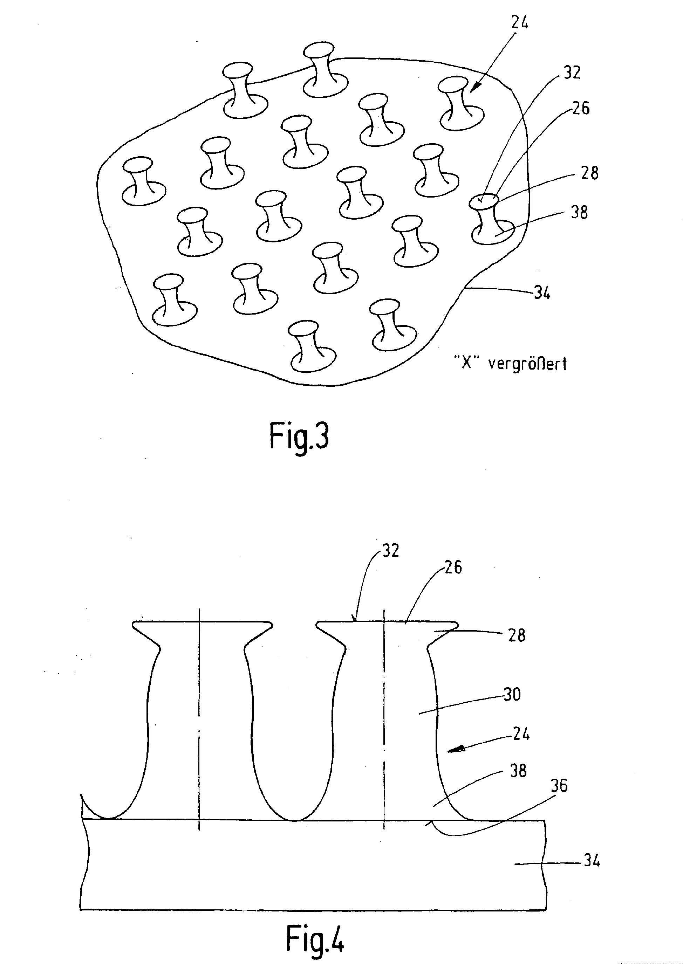

Die erfindungsgemäße Unterstützungseinrichtung zur Verbesserung der Haptik und/oder einer Greifanmutung bei Händen humanoider oder androider Art weist eine Wirkoberfläche auf, die mit Teilen der jeweiligen Hand für das Durchführen einer Bewegung zusammenwirkt. Bei dem in der Fig. 1 dargestellten Handschuh für eine humanoide Hand als Handschutz 10 ist die dahingehende Wirkoberfläche an in der Fig. 1 schraffiert dargestellten Bereichen 14 ausgebildet. Die Fig. 1 zeigt hierbei die Innenhandseite eines Handschuhs für eine rechte Hand. Die die Wirkoberfläche ausbildenden Bereiche 14 sind an den die Kuppen der Finger 16, den Daumen 18 und den Handballen 22 abdeckenden Abschnitten des Handschutzes 10 angeordnet. Die Unterstützungseinrichtung weist einzelne stielartige Vorsprünge 24 auf (siehe Fig. 3), die mit ihren jeweiligen freien Stirnseiten 26 zumindest teilweise die Anhaftung von zumindest Teilen des Handschutzes 10 an Oberflächen bei deren Berührung verbessern, die insbesondere glatt und/oder empfindlich sind.

Die in der Fig. 3 gezeigten Stirnseiten 26 der Vorsprünge 24 der Wirkoberfläche sind aus einem hydrophoben, rückstandsfrei haftenden Material, insbesondere aus Polyvinylsiloxan gebildet. Die Fig. 3 ist eine vergrößerte und nicht maßstäbliche Darstellung des in der Fig. 2 mit X bezeichneten Ausschnitts, gibt jedoch auch die Struktur der in der Fig. 1 schraffiert gekennzeichneten Bereiche 14 wieder. Zur vereinfachten Darstellung ist der gegenseitige Abstand der Vorsprünge 24 in der Fig. 3 größer dargestellt als in der praktischen Ausführung. Die Vorsprünge 24 weisen jeweils einen Kopfteil 28 auf, der von einem Stielteil 30 getragen stirnseitig jeweils eine Kontaktfläche 32 aufweist, welche bei Anhaftung von zumindest Teilen der Hand oder des Handschutzes 10 zumindest teilweise an der Oberfläche (nicht dargestellt) anliegt.

Die Vorsprünge 24 sind regelmäßig, wie beim Ausführungsbeispiel nach Fig. 3, oder unregelmäßig auf einem Träger 34 angeordnet und weisen eine Flächendichte von 10 000 bis 60 000, bevorzugt von 20 000 bis 45 000 und besonders bevorzugt von ca. 30 000 Vorsprüngen pro cm² der Fläche des Trägers 34 auf. Die Vorsprünge 24 sind zur Bildung der Wirkoberfläche von dem Träger 34 getragen, der sich einstückig an die der freien Stirnseite 26 gegenüberliegende Seite 36 (siehe Fig. 4) der Vorsprünge 24 anschließt. Der Träger 34 kann jedoch auch von einer Oberfläche von zumindest Teilen der Hand androider Art, beispielsweise eines Roboters, oder des Handschutzes 10 ausgebildet sein.

Der Träger 34 ist bevorzugt in der Art einer Folie ausgebildet, die auch dehnbar sein kann und sich im übrigen gut an den Konturverlauf einer Hand anpassen kann. So kann die folienartige Unterstützungseinrichtung in der Art eins Fingerhuts mindestens einer Fingerkuppe nachempfunden sein, um derart auf einen Finger aufgezogen dem Vereinzeln von Kleinteilen, wie beispielsweise von Briefmarken oder dergleichen zu dienen.

In den Figuren 3 und 4 sind jeweils unterschiedliche Ausführungsformen für die stielartigen Vorsprünge 24 gezeigt. So weisen die Vorsprünge 24 gemäß Fig. 3 zwischen dem gegenüber dem Stielteil 30 verbreiterten Kopfteil 28 und einem gegenüber dem Stielteil 30 verbreiterten Fußteil 38 im Längsschnitt gesehen einen durchgehend konkaven Bahnverlauf auf, beispielsweise in Form eines Hyperboloids, wohingegen bei der Ausführung nach der Fig. 4 ausgehend von dem verbreiterten Kopfteil 28 in Richtung des Fußteils 36 im Längsschnitt gesehen zunächst ein konvexer Bahnverlauf des Stielteils 30 in einen konkaven Bahnverlauf in der Nähe des Fußteils 38 beim Übergang auf den Träger 34 vorgesehen ist.

Der als Folie ausgeführte Träger 34 kann beispielsweise mittels einer Klebeverbindung mit Teilen der Hand oder des Handschutzes 10 verbunden sein, insbesondere unter Verwendung eines doppelseitigen Klebebandes, das auf seiner dem Träger 34 zugewandten Seite ein Silikon-Klebstoff aufweist, der über eine folienartige Polyestertrennschicht von einem Acrylatklebstoff separiert ist, der die Anhaftung mit Hand- oder Handschutzteilen sicherstellt.

Der Träger 34 in Form der Folie ist in einfacher Weise in Folienstücke vereinzelbar und kann so an wählbaren Bereichen der Hand oder des Handschutzes 10 angeordnet werden. Dergestalt können die in der Fig. 1 schraffiert dargestellten Bereiche 14 mit Folienstücken entsprechender Form versehen werden.

Bei der in Fig. 2 dargestellten Unterstützungseinrichtung ist diese in Form eines als Handschuh ausgebildeten Handschutzes 20 für eine humanoide Hand vollständig aus der Folie gebildet, die insbesondere durch ein Blasformverfahren in die Form eines Handschuhs gebracht ist. Der in der Fig. 2 mit "X" gekennzeichnete Ausschnitt ist in vergrößerter Darstellung in der Fig. 3 wiedergegeben. Der Handschuh weist auf seiner gesamten äußeren Oberfläche die gleiche Struktur wie im Abschnitt "X" auf. Auch die Fig. 2 zeigt einen Handschuh für eine rechte Hand mit Blick auf die Innenhandseite.

Die in der Fig. 1 dargestellte Anordnung, bei der der Handschutz 10 an diskreten Bereichen 14 mit Folienstücken ausgestattet ist, eignet sich selbstverständlich auch zum nachträglichen Ausrüsten bereits vorhandener Handschuhe. So lassen sich Handschuhe, die für die unterschiedlichsten Bereiche wie Medizin, industrielle Fertigung, sportliche Aktivitäten wie beispielsweise Snowboardfahren, Bobfahren oder Tauchen bereits mit hierfür besonders geeigneten Eigenschaften ausgerüstet sind, darüber hinaus durch die erfindungsgemäße Unterstützungseinrichtungen mit einer verbesserten Anhaftung an Oberflächen bei deren Berührung ausstatten.

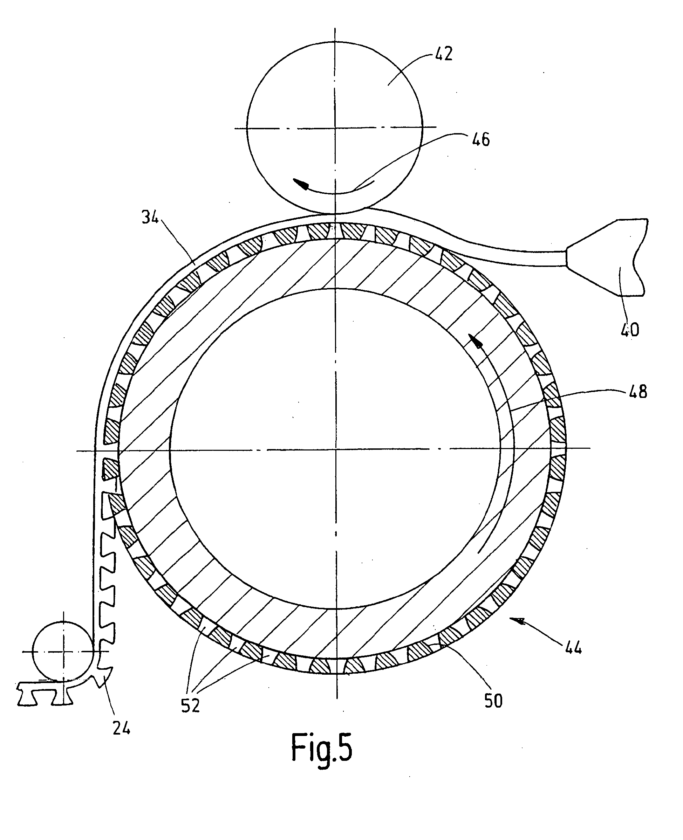

Die Fig. 5 zeigt in schematischer Darstellung Teile einer Vorrichtung zum Herstellen der Folie für eine erfindungsgemäße Unterstützungseinrichtung, bei der mit einem Düsenkopf 40 als Zuführeinrichtung für plastischen oder flüssigen sowie thixotropen Kunststoff, der als ein Band, dessen Breite derjenigen der herzustellenden Folie entspricht, dem Spalt zwischen einem Druckwerkzeug und einem Formwerkzeug zugeführt wird. Als Druckwerkzeug kommt hierbei eine Druckwalze 42 und als Formwerkzeug eine als Ganzes mit 44 bezeichnete Formwalze zum Einsatz.

Beide Walzen sind in Fig. 5 mit Bogenpfeilen 46 und 48 angegebenen Drehrichtungen angetrieben, so dass zwischen ihnen ein Förderspalt gebildet wird, durch den das Kunststoffband in Transportrichtung gefördert wird, während gleichzeitig im Spalt als Formgebungszone das Kunststoffband zum Träger 34 geformt wird und der Träger 34 an der der Formwalze 44 anliegenden Seite durch die formgebenden Elemente der Formwalze 44, die zur Bildung der stielförmigen Vorsprünge 24 erforderliche Formgebung erhält. Zu diesem Zweck weist die Formwalze 44 am Umfang ein Sieb 50 auf mit einzelnen Formhohlräumen 52. Die Verteilung und die Anzahl der Formhohlräume 52 ist wählbar, vorzugsweise sind jedoch mehr als 10 000 dieser Formhohlräume 52 pro cm² auf dem Sieb angeordnet. Als besonders günstig für die Ausgestaltung der stielartigen Vorsprünge 24 hat sich eine Anzahl von ungefähr 30 000 Formhohlräumen 52 pro cm² erwiesen.

Die Ausgestaltung des Längsschnitts des jeweils eingesetzten Formhohlraumes 52 kann den jeweiligen Erfordernissen an die stielartigen Vorsprünge 24 angepasst werden, so dass beispielsweise jeweils die in der Fig. 3 bzw. Fig. 4 dargestellten Formen von stielartigen Vorsprüngen 24 durch die gezeigte Vorrichtung herstellbar sind. Sofern es sich um vernetzbare Kunststoffmaterialien handelt, kann darüber hinaus eine Wärmequelle oder UV-Licht (nicht dargestellt) ein Nachvernetzen ermöglichen, sobald die Folie mit den stielartigen Vorsprüngen 24 aus den Formhohlräumen 52 entformt ist.

Um ein Optimum bezogen auf die Van-der-Waals-Kräfte zu erhalten, verlaufen die Kontaktflächen 32 der Kopfteile 28 nach außen hin plan. Für den Erhalt planer Kopfteile ist innerhalb der Formwalze 44 eine Einrichtung vorgesehen, die die Luft entweichen lässt oder ein Absaugen der Luft im Formhohlraum 52, beispielsweise über eine Vakuumeinrichtung oder dergleichen ermöglicht.

Alternativ zu dem dargestellten Herstellungsverfahren kann der mit stielartigen Vorsprüngen 24 versehene Träger 34 auch durch andere Verfahren wie beispielsweise mittels einer Auftragvorrichtung hergestellt werden. Hierbei werden auf den Träger 34 formwerkzeugfrei die stielartigen Vorsprünge 24 durch von der Auftragvorrichtung aufeinanderfolgend abgegebene Tröpfchen abgelagert. Die hierbei zur Anwendung kommende Düse der Auftragvorrichtung, aus der Kunststoffmaterialien mit einer Tröpfchengröße von wenigen Pikolitern versprüht werden, kann beispielsweise piezoelektrisch oder elektrothermisch betätigbar sein. Da die dahingehende Düse relativ zum Träger 34 in allen drei Raumrichtungen bewegbar ist, lassen sich durch ein solches Verfahren eine große Vielzahl von Formen (nicht dargestellt) für die stielartigen Vorsprünge 24 herstellen.

## Patentansprüche

1. Unterstützungseinrichtung zur Verbesserung der Haptik und/oder einer Greifanmutung bei Händen humanoider oder androider Art mit einer Wirkoberfläche, die mit Teilen (16, 18, 22) der jeweiligen Hand für das Durchführen einer Bewegung zusammenwirkt und die einzelne stielartige Vorsprünge (24) aufweist, die mit ihren jeweiligen freien Stirnseiten (26) zumindest teilweise die Anhaftung von zumindest Teilen der Hand oder eines Handschutzes (10) an Oberflächen bei deren Berührung verbessern, die insbesondere glatt und/oder empfindlich sind, **dadurch gekennzeichnet, dass** die jeweiligen freien Stirnseiten (26) der Vorsprünge (24) derart ausgeführt sind, dass deren Anhaftung durch zwischen den freien Stirnseiten (26) und der jeweiligen Oberfläche wirksame Van-der-Waals-Kräfte erfolgt.

2. Unterstützungseinrichtung nach Anspruch 1, **dadurch gekennzeichnet, dass** zumindest die Stirnseiten (26) der Vorsprünge (24) der Wirkoberfläche aus einem hydrophoben, rückstandsfrei haftenden Material, insbesondere aus Polyvinylsiloxan, gebildet sind.

3. Unterstützungseinrichtung nach einem der vorhergehenden Ansprüche, **dadurch gekennzeichnet, dass** die Vorsprünge (24) jeweils einen Kopfteil (28) aufweisen, der von einem Stielteil (30) getragen stirnseitig jeweils eine Kontaktfläche (32) aufweist, welche bei Anhaftung von zumindest Teilen der Hand oder des Handschutzes (10) zumindest teilweise an der Oberfläche anliegt.

4. Unterstützungseinrichtung nach einem der vorhergehenden Ansprüche, **dadurch gekennzeichnet, dass** die Vorsprünge (24) regelmäßig oder unregelmäßig auf einem Träger (34) angeordnet sind mit einer Flächendichte von 10 000 bis 60 000, bevorzugt von 20 000 bis 45 000 und besonders bevorzugt von circa 30 000 Vorsprüngen pro Quadratzentimeter der Fläche des Trägers (34).

5. Unterstützungseinrichtung nach einem der vorhergehenden Ansprüche, **dadurch gekennzeichnet, dass** die Vorsprünge (24) zur Bildung der Wirkoberfläche von dem Träger (34) getragen sind, der sich einstückig an die der freien Stirnseite (26) gegenüberliegenden Seite (36) der Vorsprünge (24) anschließt oder von einer Oberfläche von zumindest Teilen der Hand oder des Handschutzes (10) ausgebildet ist.

6. Unterstützungseinrichtung nach einem der vorhergehenden Ansprüche, **dadurch gekennzeichnet, dass** der Träger (34) in der Art einer Folie ausgebildet ist.

7. Unterstützungseinrichtung nach einem der vorhergehenden Ansprüche, **dadurch gekennzeichnet, dass** die Folie mittels einer Klebeverbindung mit Teilen der Hand oder des Handschutzes (10) verbunden ist.

8. Unterstützungseinrichtung nach einem der vorhergehenden Ansprüche, **dadurch gekennzeichnet, dass** aus der Folie Folienstücke vereinzelbar sind, die an wählbaren Bereichen (14) der Hand oder des Handschutzes (10) anordenbar sind.

9. Unterstützungseinrichtung nach einem der vorhergehendenAnsprüche, **dadurch gekennzeichnet, dass** mindestens ein Folienstück jeweils im Bereich der Fingerkuppen auf der Innenhandseite der Hand oder des Handschutzes angeordnet ist.

10. Unterstützungseinrichtung nach einem der vorhergehenden Ansprüche, **dadurch gekennzeichnet, dass** mindestens ein Folienstück auf der Handinnenfläche, insbesondere im Bereich des Handballens (22), angeordnet ist.

11. Unterstützungseinrichtung nach einem der vorhergehenden Ansprüche, **dadurch gekennzeichnet, dass** mindestens ein Folienstück auf der Handrückseite, insbesondere im Bereich der Finger angeordnet ist.

12. Unterstützungseinrichtung nach einem der vorhergehenden Ansprüche, **dadurch gekennzeichnet, dass** die Unterstützungseinrichtung in Form eines Handschuhs für eine humanoide Hand vollständig aus der Folie gebildet ist, die insbesondere durch ein Blasformverfahren in die Form eines Handschuhs gebracht ist.

## Claims

1. A support device for improving the haptics and/or gripping impression for hands of the humanoid or android type with an active surface which interacts with parts (16, 18, 22) of the respective hand for executing a movement and which has individual stem-like projections (24) which with their respective free end faces (26) at least partially improve the adhesion of at least parts of the hand or of a hand protection (1) to surfaces which are especially smooth and/or delicate when they are touched, **characterised in that** the respective free end faces (26) of the projections (24) are designed such that their adhesion takes place by van der Waals forces which act between the free end faces (26) and the respective surface.

2. The support device according to Claim 1, **characterised in that** at least the end faces (26) of the projections (24) of the active surface are formed from a water-repellent material which adheres without residue, especially from polyvinyl siloxane.

3. The support device according to either of the preceding claims, **characterised in that** the projections (24) each have a head part (28) which, borne by a stem part (30), on the end face has a contact surface (32) which at least partially adjoins the surface in the adhesion of at least parts of the hand or of the hand protection (10).

4. The support device according to any of the preceding claims, **characterised in that** the projections (24) are regularly or irregularly arranged on a backing (34) with a surface density from 10,000 to 60,000, preferably from 20,000 to 45,000, and especially preferably of approximately 30,000 projections per square centimetre of the surface of the backing (34).

5. The support device according to any of the preceding claims, **characterised in that** the projections (24) for forming the active surface are borne by the backing (34) which integrally adjoins the side (36) of the projections (24) which is opposite the free end face (26) or is formed by a surface of at least parts of the hand or of the hand protection (10).

6. The support device according to any of the preceding claims, **characterised in that** the backing (34) is made in the form of a film.

7. The support device according to any of the preceding claims, **characterised in that** the film is joined to parts of the hand or of the hand protection (10) by means of an adhesive bond.

8. The support device according to any of the preceding claims, **characterised in that** pieces of film, which can be arranged on selective regions (14) of the hand or of the hand protection (10), can be isolated from the film.

9. The support device according to any of the preceding claims, **characterised in that** at least one piece of film is respectively located in the region of the fingertips on the inside of the hand or of the hand protection.

10. The support device according to any of the preceding claims, **characterised in that** there is at least one piece of film on the palm of the hand, especially in the region of the ball of the thumb (22).

11. The support device according to any of the preceding claims, **characterised in that** there is at least one piece of film on the back of the hand, especially in the region of the fingers.

12. The support device according to any of the preceding claims, **characterised in that** the support device in the form of a glove for a humanoid hand is made entirely from film which has been brought into the shape of a glove particularly by a blow moulding process.

## Revendications

1. Dispositif de support pour l'amélioration de l'haptique et/ou de l'agrément de préhension pour des mains de type humanoïde ou androïde, ayant une surface active qui coopère avec des parties (16, 18, 22) de la main respective pour l'exécution d'un mouvement et qui a des saillies (24) individuelles de type en tige qui, par leurs côtés (16) frontaux libres respectifs, améliorent au moins en partie l'adhérence d'au moins des parties de la main ou d'un protège main (10) à des surfaces lors de leur toucher, qui sont notamment lisses et/ou sensibles, **caractérisé en ce que** les côtés (26) frontaux libres respectifs des saillies (24) sont réalisés de manière à ce que leur adhérence s'effectue par des forces de Van-der-Waals agissant entre les côtés (26) frontaux libres et la surface respective.

2. Dispositif de support suivant la revendication 1, **caractérisé en ce qu'**au moins les côtés (26) frontaux des saillies (24) de la surface active sont en un matériau hydrophobe et adhérant sans résidu, notamment en polyvinylsiloxane.

3. Dispositif de support suivant l'une des revendications précédentes, **caractérisé en ce que** les saillies (24) ont respectivement une partie (28) de tête qui a, du côté frontal en étant porté par une partie (30) de tige respectivement, une surface (32) de contact qui, lors de l'adhérence d'au moins des parties de la main ou du protège main (10), s'applique au moins en partie à la surface.

4. Dispositif de support suivant l'une des revendications précédentes, **caractérisé en ce que** les saillies (24) sont disposées régulièrement ou irrégulièrement sur un support (34) à une densité de surface de 10 000 à 60 000, de préférence de 20 000 à 45 000 et d'une manière particulièrement préférée d'environ 30 000 saillies par centimètre carré de la surface du support (34).

5. Dispositif de support suivant l'une des revendications précédentes, **caractérisé en ce que** les saillies (24) sont, pour la formation de la surface active, portées par le support (34) qui se raccorde d'une pièce au côté (36) des saillies (24) opposé au côté (26) frontal libre ou qui est formé par une surface d'au moins des parties de la main ou du protège main (10).

6. Dispositif de support suivant l'une des revendications précédentes, **caractérisé en ce que** le support (34) est constitué à la manière d'une feuille.

7. Dispositif de support suivant l'une des revendications précédentes, **caractérisé en ce que** la feuille est reliée au moyen d'un collage à des parties de la main ou du protège main (10).

8. Dispositif de support suivant l'une des revendications précédentes, **caractérisé en ce que** de la feuille peuvent être individualisés des morceaux de feuille qui peuvent être mis en des zones (14) qui peuvent être sélectionnées de la main ou du protège main (10).

9. Dispositif de support suivant l'une des revendications précédentes, **caractérisé en ce qu'**au moins un morceau de feuille est disposé respectivement dans la zone des pulpes de doigt du côté intérieur de la main ou du protège main.

10. Dispositif de support suivant l'une des revendications précédentes, **caractérisé en ce qu'**au moins un morceau de feuille est disposé sur la surface intérieure de la main, notamment dans la zone de la paume (22) de la main.

11. Dispositif de support suivant l'une des revendications précédentes, **caractérisé en ce qu'**au moins un morceau de feuille est disposé, du côté arrière de la main, notamment dans la zone des doigts.

12. Dispositif de support suivant l'une des revendications précédentes, **caractérisé en ce que** le dispositif de support est, sous la forme d'un gant pour une main humanoïde, formé entièrement de la feuille qui est mise, notamment par un procédé de moulage par soufflage, sous la forme d'un gant.
